# EUROPEAN PATENT APPLICATION

(11) **EP 1 876 144 A1**
(43) Date of publication of application: **09.01.2008**
(21) Application number: 06732501.9
(22) Date of filing: 26.04.2006
(51) Int. Cl.: C01B 33/18, G03G 9/08

(54) **SILICA-TITANIA COMPOSITE OXIDE PARTICLES**

(30) Priority: 27.04.2005 JP 2005129736
(71) Applicant: Nippon Aerosil Co., Ltd., Shinjuku-ku, Tokyo 163-0913 (JP)
(72) Inventor: AMANO, Yuki Yokkaichi Plant Nippon Aerosil Co. Ltd, Yokkaichi-shi, Mie 5100841 (JP); KAMADA, Masahiko Yokkaichi Plant, Nippon Aerosil, Yokkaichi-shi, Mie 5100841 (JP); INOUE, Akira Yokkaichi Plant, Nippon Aerosil Co., Yokkaichi-shi, Mie 5100841 (JP); BRANDL, Paul Yokkaichi Plant, Nippon Aerosil Co., Yokkaichi-shi, Mie 5100841 (JP)
(74) Representative: HOFFMANN EITLE
(86) International application number: PCT/JP2006/309199
(87) International publication number: WO 2006/123541

(57) **Abstract**

As for a pyrogenically produced silica-titania mixed oxide particle, titanium content is 50 wt% or more, a BET specific surface area is 100 m²/g or less. When these particles are observed using an electron microscope, a ratio of a silica single particle and a titania single particle is controlled to 10% or less, and preferably 5% or less. The silica-titania mixed oxide particle has high composting ratio of silica and titania, and excellent dispersibility and environmental stability. Further, when the particle is used as an external additive for an electrophotographic toner, the particle has sufficient durability and transferability, so that an excellent image characteristic can be obtained.

## Description

### [Background of the Invention]

### [Field of the invention]

The present invention relates to a silica-titania mixed oxide particle having high mixed rate, and excellent dispersibility and environmental stability.

### [Description of the Prior Art]

As an external additive for an electrophotographic toner, a metallic oxide fine particle such as a silica fine particle, a titania fine particle, an alumina fine particle or the like has been used, and a particle obtained by hydrophobizing these particles has also been used. As for the metallic oxide fine particle, excellent fluidity, dispersibility, environmental stability, electrostatic charge stability and the like are required for the particles themselves, in order to increase sharpness, stability and the like of an electrophotographic image.

For example, in Japanese Patent Registrations No. 3587671 and 3587672, the following electrophotographic developer is indicated, that is, an electrophotographic developer comprising silica fine particles which contain aluminum, boron, or titanium and have hydrophobized surfaces. Further, in Japanese Patent Registration No. 2503370, a titanium dioxide mixed oxide particle containing aluminum or silicon is indicated. Furthermore, in Japanese Patent Application Laid Open No. 2004-155648, as for a silica particle used as the external additive for the electrophotographic toner, a silica particle obtained by hydrophobizing a surface of fumed silica with a metal alkoxide is indicated.

As for the above-described silica fine particle indicated in Japanese Patent Registrations No. 3587671 and 3587672, the electrostatic charge stability is increased by containing aluminum, boron or titanium, and a BET specific surface area is 100 m²/g or less. However, for example, titanium content is 25% or less, and the compositing ratio of silica and titanium is not specified, so that the environmental stability and the electrostatic charge stability are insufficient. On the other hand, as for the above-described silica-titania mixed oxide particle indicated in Japanese Patent Registration No. 2503370, although titanium content is high, the compositing ratio of titania to silica is not specified like the above-described silica fine particle, so that the environmental stability and the electrostatic charge stability are insufficient. As for the silica fine particle indicated in Japanese Patent Application Laid Open No. 2004-155648, although the surface is hydrophobized so as to increase the fluidity and the electrostatic charge stability, titanium or the like is not contained, so that improving is required more.

The present invention solves the above-described problems, and an objective of the present invention is to provide a silica-titania mixed oxide fine particle which has high compositing ratio of titania to silica, excellent dispersibility and environmental stability, and is suitable as an external additive for an electrophotographic toner.

### [Summary of the Invention]

The present invention relates to the following silica-titania mixed oxide fine particle.
(1) A pyrogenically produced silica-titania mixed oxide particle, wherein titania content is 50 wt% or more, a BET specific surface area is 100 m²/g or less, a ratio of a silica single particle and a titania single particle is 10% or less when observing using an electron microscope.
(2) The silica-titania mixed oxide particle according to the above-described (1), wherein the ratio of the silica single particle and the titania single particle is 5% or less when observing using the electron microscope.
(3) The silica-titania mixed oxide particle according to the above-described (1) or (2), wherein the surface of the mixed oxide particle is hydrophobized.
(4) An electrophotographic toner containing the silica-titania mixed oxide particle according to any one of the above-described (1) to (3). Since silica-titania mixed oxide fine particle of the present invention has the BET specific surface area of 100 m²/g or less, durability and transferability are sufficient, and environmental stability is excellent when the particle is used as the external additive for the electrophotographic toner. Further, the silica-titania mixed oxide fine particle of the present invention has the high fluidity and high dispersibility by silica, and high environmental stability and high electrostatic charge stability by titania, so that excellent imaging characteristics can be obtained. More particularly, since the titania content is 50% or more, the environmental stability and the electrostatic charge stability are excellent. Further, silica and titania are mixed and the compositing ratio is high, so that there are no problems of high tight bulk density and bad influence for color tone by titania.

### [Detailed description of the preferred embodiment]

Hereinafter, the present invention is described concretely.

One aspect of the silica-titania mixed oxide particle of the present invention is as follows. That is, the silica-titania mixed oxide particle is made by a pyrogenic process, the titania content is 50 wt% or more, the BET specific surface area is 100 m²/g or less, and the ratio of the silica single particle and the titania single particle is 10% or less when it is observed using the electron microscope.

As for a method for making the silica-titania mixed oxide particle, for example, the method comprises the steps of; inducing gaseous silicon tetrachloride and gaseous titanium tetrachloride into a mixing chamber of a combustion burner together with inert gas; mixing those with hydrogen and air to make a mixing gas having a predetermined ratio; combusting the mixing gas in a reaction chamber at a temperature of 1000°C to 3000°C to generate a silica-titania mixed oxide particle; cooling these particles; and collecting these particle with a filter.

In the above-described making method, the compositing ratio of tiatnia to silica (the compositing ratio is higher when the ratio of the silica single particle and titania single particle is lower) is influenced with the flow ratio of silicon tetrachloride and titanium tetrachloride, the combusting time and temperature, the combusting atmosphere, and the other combusting conditions. So, in the present invention, the combusting conditions, such as time, temperature, atmosphere and the like, are complexly adjusted together with the flow ratio of silicon tetrachloride and titanium tetrachloride so as to have the ratio of the silica single particle and the titania single particle of 10% or less, and preferably 5% or less.

The oxide particle of the present invention is the silica-titania mixed oxide particle made by the above-described pyrogenic method. Since silica and titania are mixed, the particle has the high fluidity and dispersibility by silica, and has the excellent environmental stability and electrostatic charge stability by titania. Further, since the titanium content is 50 wt% or more, the environmental stability and the electrostatic charge stability are excellent especially In addition, when the titanium content is less than 50%, silica content becomes higher relatively, so that the unstable influence of silica for environmental stability is increased.

Further, as for the silica-titania mixed oxide particle, the compositing ratio of titania to silica is high, and the existing ratio of the silica single particle and the titania single particle is 10% or less, and preferably 5% or less. The compositing ratio of titania to silica is high, so that even when there are many titanium contents, there are no problems of high tight bulk density and bad influence for color tone by titania.

The existing ratio of the silica single particle and the titania single particle can be determined by observing using a transmission electron microscope (TEM-EDX). More particularly, in the case that the existing ratio is determined using the transmission electron microscope, for example, when observing and element mapping are carried out continuously and visually under a magnification of 100,00 to 200,000 times, elements of Si and Ti are respectively mapped to each observed particle. Then, when both elements of Si and Ti are simultaneously observed in one particle, the particle is determined as a mixed particle, and when only any one of the elements is observed in the particle, the particle is determined as a single particle. In the observation, the number of the particles which are not mixed, per 100 particles, is determined as the existing ratio of the single particle. As for the silica-titania mixed oxide particle of the present invention, the existing ratio of the silica single particle and the titania single particle observed by the above-described process is 10% or less, and preferably 5% or less.

In addition, as for the oxide particle of the present invention in which silica and titania are mixed, the characteristic and behavior are different from those of the particle obtained by mixing the silica particle and the titania particle. The mixing particle or the mixing powder of the silica particle and the titania particle has high tight bulk density and high concealing ability by titania, and unstable environmental stability by silica. However, the silica-titania mixed oxide particle has low tight bulk density and concealing ability, and excellent environmental stability.

Further, as for the silica-titania mixed oxide particle of the present invention, the BET specific surface area is 100 m²/g or less. When the BET specific surface area is more than 100 m²/g, since the particle diameter of the fine particle is smaller than the toner particle at the time of using the oxide particle as the external additive for the electrophotographic toner, the fine particle is easily embedded between the toner particles, so that the durability is insufficient. Further, since the specific surface area is large, the particle easily adsorbs moisture in air, so that the environmental stability becomes insufficient.

The silica-titania mixed oxide particle of the present invention includes a particle having the hydrophobized surface. As for a hydrophobizing method, it is not limited especially, and the following conventional method can be used, that is, a method in which a hydrophobizing agent is sprayed while stirring or flowing the mixed oxide particle, a method in which a vapor of a hydrophobizing agent is induced while stirring or flowing the mixed oxide particle, or the like. Further, as for the hydrophobizing agent, it is not especially limited, and the publicly known agent can be used.

The silica-titania mixed oxide particle of the present invention has high fluidity and high dispersibility, and excellent environmental stability and electrostatic charge stability. Thus, the oxide particle is suitable as the external additive for the electrophotographic toner.

### Examples and Comparison examples

As for a silica-titania mixed oxide particle, influences with respect to the following matters were examined, that is, a content ratio of titania to silica, a specific surface area, an environmental stability due to difference of existing amounts of single particles (HH/LL ratio), fluidity, and the fogging of the image. These results were shown in Table 1. Further, examples of a mixing particle of a silica particle and titania particle were simultaneously shown. In addition, the BET specific surface area, the HH/LL ratio, the fluidity, and the fogging of the image were respectively measured by the following methods.

BET specific surface area: The BET specific surface area was measured using a rapidly surface area measuring device (SA1100 type, made by Shibata Scientific Technology Corporation).

Environmental stability (HH/LL ratio): 0.4g of a hydrophobic silica-titania mixed oxide particle and 40g of negative charge type 8 µm toner were stirred and mixed by a mixer so as to obtain an electrophotographic toner composite. 2g of this electrophotographic toner composite and 48g of the carrier were taken into glass containers (having a capacity 75 mL), and the containers were allowed to stand under the HH environment or the LL environment for 24 hours. At this time, the HH environment had an atmosphere where the temperature was 40°C and the humidity was 85%, and the LL environment had an atmosphere where the temperature was 10°C and the humidity was 20%. After allowing to stand under the HH environment or the LL environment for 24 hours, the mixtures of the toner composite and the iron powder carrier were respectively shaken for 5 minutes using a Turbula mixer. 0.2g of the iron powder carrier containing the toner composite was taken and the electrostatic charge amount is measured using a blow-off electrostatic charge amount measuring device (TB-200 type, made by Toshiba Chemical Corporation). The measured value after nitrogen blowing for 1 minute was determined as the electrostatic charge amount of the toner composite. The ratio (HH/LL) was calculated by the measured electrostatic charge amounts of these toner composites under HH environment and LL environment, where these toner composites were respectively allowed to stand under the HH environment and the LL environment for 24 hours. The measured ratio of HH/LL was determined as the value of the environmental stability. When this value closes to 1, the toner composite becomes preferable one.

Fluidity: A screen having a hole diameter of 45 µm was shaken to sieve powders using a powder tester (PT-N type, made by Hosokawa Micron Corporation), and ratio of all powders which passed through the screen was measured. This ratio was determined as the 45 µm screen passing ratio.

Fogging: The electrophotographic toner composite was obtained by stirring and mixing 0.4g of the hydrophobic silica-titania mixed oxide particle and 40g of negative charge type toner. 50,000 or more papers were printed using the electrophotographic toner composite using a commercial copying machine, and then, the fogging was observed. The evaluation was carried out visually, and the rank was made as follows, that is, [1] there was no fogging, [2] there was almost no fogging, [3] although there were few fogging, it was satisfactory for practical use, [4] there were many fogging, and it was not satisfactory for practical use, [5] there were remarkable-many fogging, it cannot be used practically.

Single particle %: The ratio of the single particle of silica or titania was measured using the TEM-EDX (the using device was HF-2200, made by Hitachi High Technology Corporation, and 1000 or more particles were analyzed at acceleration voltage of 200 kV). Observing and an element mapping were carried out continuously and visually under a magnification of 100,00 to 200,000 times, and elements of Si and Ti were mapped to the observed particles. Then, when both elements of Si and Ti were simultaneously observed in one particle, the particle is determined as the mixed oxide. Further, when the particles were in an agglomerated state, the examination was difficult. So, observation was carried out in the state where the particles were sufficiently dispersed, and the ratio of the single particle was measured.

Clearly from Table 1, as for the particles having the particle conditions within the range of the present invention, the environmental stability and the fluidity were excellent, and there were few fogging of the image. On the other hand, as for the particles having the particle conditions out of the range of the present invention, the environmental stability was low, and the mixed particle had low fluidity, so that there were many fogging of the image.

**Table 1**

| No. | Kinds | Si Amounts % | Ti Amounts % | Single Particle % | BET | Environmental Stability | Fluidity | Fogging |
|---|---|---|---|---|---|---|---|---|
| A-1 | Mixed Oxide | 30 | 70 | 7 | 70 | 0.92 | 99 | 1 |
| A-2 | Mixed Oxide | 50 | 50 | 5 | 50 | 0.89 | 98 | 1 |
| A-3 | Mixed Oxide | 5 | 95 | 10 | 100 | 0.95 | 92 | 2 |
| A-4 | Mixed Oxide | 20 | 80 | 2 | 20 | 0.94 | 88 | 3 |
| B-1 | Mixed Oxide | 70 | 30* | 6 | 200 | 0.39 | 99 | 4 |
| B-2 | Mixed Oxide | 95 | 5* | 40* | 150 | 0.48 | 99 | 4 |
| C-1 | Mixed Powder | Si Particle 50%, Ti Particle 50% | | | 50 | 0.60 | 75 | 5 |
| C-2 | Mixed Powder | Si Particle 5%, Ti Particle 95% | | | 100 | 0.71 | 32 | 5 |

| | | | | | | | | |
|---|---|---|---|---|---|---|---|---|
| (Note) A-1 to A-4 are examples of the present invention. B-1, B-2, C-1 and C-2 are comparison example Mark (*) is not within the range of the present invention. BET is a BET specific surface area (m²/g Environmental Stability is (HH/LL). Fogging is the fogging on the image. If the value of HH/LL closes to 1, it is preferable. If the value of fluidity closes to 100, it is preferable. | | | | | | | | |

### Industrial applicability

When the silica-titania mixed oxide fine particle was used as the external additive for the electrophotographic toner, the particle has the sufficient durability and transferability, and has the high fluidity and the high dispersibility by silica together with the high environmental stability and the high electrostatic charge stability by titania. Thus, the excellent image characteristics can be obtained. More particularly, since the titanium content is 50% or more, the environmental stability and the electrostatic charge stability are excellent. Further, silica and titania are mixed, and the compositing ratio is high, so that there is no problem of the high tight bulk density by titania, and the color tone is not influenced.

## Claims

1. A pyrogenically produced silica-titania mixed oxide particle, wherein titanium content is 50 wt% or more, a BET specific surface are is 100 m²/g or less, a ratio of a silica single particle and a titania single particle is 10% or less when it is observed using an electron microscope.

2. A pyrogenically produced silica-titania mixed oxide particle, according to claim 1, wherein the ratio of the silica single particle and the titania single particle is 5% or less when it is observed using the electron microscope.

3. A pyrogenically produced silica-titania mixed oxide particle, according to claim 1 or 2, wherein the surface of the particle is hydrophobized.

4. An electrophotographic toner containing the silica-titania mixed oxide particle according to any one of claims 1 to 3.
